# EUROPÄISCHE PATENTSCHRIFT

(11) **EP 1 366 302 B1**
(45) Veröffentlichungstag und Bekanntmachung des Hinweises auf die Patenterteilung: **13.10.2004**
(21) Anmeldenummer: 02729977.5
(22) Anmeldetag: 08.03.2002
(51) Int. Cl.: F16B 5/00

(54) **ANORDNUNG ZUM LÖSBAREN VERBINDEN ZWEIER STUMPF ANEINANDER STOSSENDER BAUTEILE**
ARRANGEMENT FOR DETACHABLY CONNECTING TWO COMPONENTS ABUTTING AGAINST EACH OTHER IN A FLUSH MANNER
DISPOSITIF PERMETTANT L'ASSEMBLAGE AMOVIBLE DE DEUX COMPOSANTS S'APPLIQUANT BOUT A BOUT

(30) Priorität: 09.03.2001 DE 10111442
(43) Veröffentlichungstag der Anmeldung: 03.12.2003
(73) Patentinhaber: MAQUET GmbH & Co. KG, 76437 Rastatt (DE)
(72) Erfinder: KOCH, Guido, 76131 Karlsruhe (DE)
(74) Vertreter: Schaumburg, Thoenes, Thurn, Landskron Patentanwälte
(86) Internationale Anmeldenummer: PCT/EP2002/002575
(87) Internationale Veröffentlichungsnummer: WO 2002/073043

(56) Entgegenhaltungen:
- DE-A- 3 513 384
- DE-A- 3 820 471
- DE-A- 4 238 680
- DE-A- 19 511 546
- FR-A- 1 603 501
- US-A- 5 347 668

## Beschreibung

Die Erfindung betrifft eine Anordnung zum lösbaren Verbinden zweier stumpf aneinander stoßender Bauteile, von denen ein erstes Bauteil eine Schwalbenschwanznut und das zweite mindestens ein zum Eingriff in die Schwalbenschwanznut bestimmtes Gleitstück hat, das nach dem Einführen in die Schwalbenschwanznut mittels einer Spannvorrichtung verstellbar ist, um die beiden Bauteile mit ihren Stoßflächen gegeneinander zu spannen. Eine solche Anordnung ist aus dem Dokument DE 42 38 680 A schon bekannt.

Eine Schwalbenschwanznut ist herkömmlicherweise eine hinterschnittene Nut, bei der die Innenflächen der die Nut begrenzenden Nutschenkel einen spitzen Winkel mit dem Nutgrund bilden. Das Gleitstück hat eine komplementäre Form. Bei einer bekannten Lösung liegen die miteinander zu verbindenden Bauteile mit Stoßflächen aneinander an, die im wesentlichen parallel zum Nutgrund verlaufen. Das Gleitstück wird beispielsweise mittels einer Spannschraube senkrecht zu diesen Stoßflächen verstellt, um die beiden Bauteile mit ihren Stoßflächen gegeneinander zu spannen. Dabei üben die Schrägflächen an dem Gleitstück über die schrägen Innenflächen der Nutschenkel auf diese eine Spreizkraft aus, so daß die Nutschenkel beim Anziehen der Spannschraube nach außen gedrängt werden. Ein ähnlicher Effekt ergibt sich, wenn auf eines der beiden Bauteile relativ zu dem anderen ein Moment um eine zur Nutlängsrichtung parallele Achse ausgeübt wird. Dadurch wird auf die eine Seite des Gleitstückes eine Zugkraft von dem Nutgrund weg ausgeübt, welche über die aneinander anliegenden Schrägflächen an dem Gleitstück und dem zugehörigen Nutschenkel dazu führen, daß Letzterer nach außen gedrängt wird. Dies kann zu einer bleibenden Verformung der Nutschenkel und im schlimmsten Fall auch zu einem Ausreißen des Gleitstückes aus der Schwalbenschwanznut führen.

Der Erfindung liegt die Aufgabe zugrunde, eine Verbindungsanordnung der eingangs genannten Art so auszubilden, daß weder beim Spannen des Gleitstückes noch bei einer Belastung eines der Bauteile durch ein Drehmoment um eine zur Nutlängsrichtung parallele Achse die Nutschenkel der Schwalbenschwanznut nach außen gebogen werden können oder eine elastische Deformation der Nutschenkel zu einer Relativbewegung der Bauteile führen kann.

Diese Aufgabe wird erfindungsgemäß dadurch gelöst, daß die Innenfläche und die Außenfläche der die Schwalbenschwanznut begrenzenden Nutschenkel jeweils parallel zueinander sind und daß in der Stoßfläche des das Gleitstück tragenden Bauteiles zu den Außenflächen und den Stirnflächen der Nutschenkel parallele Stützflächen für die Nutschenkel ausgebildet sind.

Die erfindungsgemäße Lösung führt dazu, daß beim Spannen des Gleitstückes die Nutschenkel nicht nach außen gedrückt sondern gegen die Stützflächen des das Gleitstück tragenden Bauteils gepreßt werden. Die Nutschenkel werden also zwischen dem Gleitstück und der jeweiligen Stützfläche eingespannt. Sie können auf diese Weise weder beim Spannen des Gleitstückes noch beim Ausüben eines Drehmomentes auf das das Gleitstück tragende Bauteil um eine zur Nutlängsrichtung parallele Achse nach außen ausweichen. Eine an diesem Bauteil angreifendes Drehmoment wird über die an der Stirnseite eines Nutschenkels anliegende Stützfläche in diesem Nutschenkel eingeleitet und somit eine Drehung des Bauteiles um den Schnittpunkt der Normalen der Schenkelflanken verhindert. Damit wird eine Beschädigung der Nutschenkel und ein Ausreißen des Gleitstückes aus der Schwalbenschwanznut mit Sicherheit verhindert.

Vorzugsweise ist das Gleitstück in einer Aussparung der Stoßfläche des zweiten Bauteiles senkrecht zu dieser Stoßfläche verstellbar geführt und hat eine Gewindebohrung, in die eine sich an dem zweiten Bauteil abstützende Spannschraube eingreift. Dies ermöglicht ein zuverlässiges Spannen des Gleitstückes.

Die erfindungsgemäße Lösung eignet sich insbesondere für eine Anwendung, bei der ein erstes Bauteile eine Patientenlagerfläche ist, an deren eines Längsende das zweite Bauteil, beispielsweise eine Kopflagerplatte ansetzbar ist. Obwohl eine solche Patientenlagerplatte nur relativ dünn ist und die zur Verbindung vorgesehenen Stoßflächen zwischen den beiden stumpf aneinander grenzenden Bauteilen somit schmal sind, kann durch die erfindungsgemäße Verbindungsanordnung eine zuverlässige, steife und stabile Verbindung gewährleistet werden. Um die Gleitstücke und die Spannschrauben an der Kopflagerplatte unterbringen zu können, hat diese zweckmäßigerweise einen Verbindungsholm, der parallel zu der die Schwalbenschwanznut aufweisenden Stirn- oder Stoßfläche der Patientenlagerplatte ist und in der das mindestens eine Gleitstück und die ihr zugeordnete Spannschraube gelagert sind.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutert. Es zeigen:
- Fig. 1: einen schematischen Teilschnitt durch die Verbindungsstelle zwischen einer Patientenlagerfläche und einer Kopflagerplatte senkrecht zur Plattenebene und senkrecht zu den aneinander grenzenden Stoßflächen der beiden Bauteile bei einer Lösung nach dem Stand der Technik,
- Fig. 2: einen der Figur 1 entsprechenden Schnitt durch ein Ende einer Patientenlagerplatte und die Kopflagerplatte im getrennten Zustand entsprechend der erfindungsgemäßen Lösung und
- Fig. 3: einen der Figur 1 entsprechenden Schnitt durch eine erfindungsgemäße Verbindungsanordnung mit den miteinander verbundenen Bauteilen.

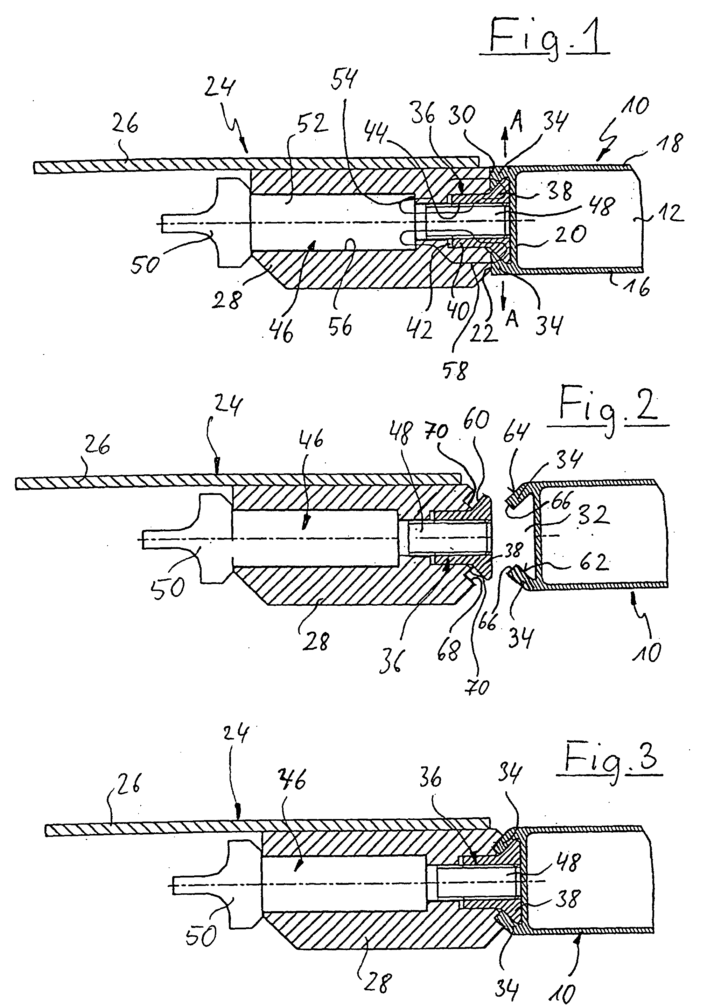

In Figur 1 ist mit 10 eine Patientenlagerplatte bezeichnet. Sie umfaßt einen Schaumstoffkern 12 und eine flache kastenförmige Hülle 14 aus kohlefaserverstärktem Kunststoff mit einem Boden 16, einer Decke 18 und einer Boden und Decke miteinander verbindende Seitenwand 20.

An die Außen- oder Stirnfläche 22 am Längsende der Patientenlagerplatte 10 ist eine allgemein mit 24 bezeichnete Kopflagerplatte angesetzt. Diese umfaßt die eigentliche Platte 26 und einen Verbindungsholm 28, der mit einer Stoßfläche 30 an der Stirnfläche 22 der Patientenlagerplatte 10 anliegt. In der Seitenwand 20 ist eine Schwalbenschwanznut 32 ausgebildet, die von zwei Nutschenkeln 34 begrenzt ist. In die Schwalbenschwanznut 32 greift ein allgemein mit 36 bezeichnetes Gleitstück ein, das einen dem Nutquerschnitt angepaßten Kopf 38 und einen Schaft 40 hat, der in eine in dem Verbindungsholm 28 ausgebildete Aussparung 42 eingreift. Das Gleitstück 36 hat eine senkrecht zur Stoßfläche 30 gerichtete Gewindebohrung 44, in die eine den Verbindungsholm 28 durchsetzende Spannschraube 46 mit einem Gewindeabschnitt 48 eingreift. Die Spannschraube 46 hat einen Handgriff 50 und stützt sich mit einem durchmessergrößeren Abschnitt 52 an einer Schulter 54 der sie aufnehmenden Bohrung 56 in dem Verbindungsholm 28 ab.

Wird bei dieser in Figur 1 dargestellten bekannten Lösung die Spannschraube 46 angezogen, so wird das Gleitstück 36 in der Figur 1 nach links, d.h. vom Nutgrund der Schwalbenschwanznut 32 weg gezogen und mit den Schrägflächen 60 an der Rückseite des Kopfes 38 gegen die zu ihnen parallelen Innenflächen 62 der Nutschenkel 34 gespannt. Der dabei auftretende Kraftfluß innerhalb der miteinander zu verbindenden Bauteile 10 und 24 ist durch die Linie 58 wiedergegeben. Wie man erkennt, bewirkt die Umlenkung der Kraftlinien innerhalb der Nutschenkel 34 eine in Richtung der Pfeile A nach außen gerichtete Spreizkraft auf die Nutschenkel 34 aus, so daß die Schwalbenschwanznut 32 dadurch aufgeweitet wird. Wird ferner auf die Kopflagerplatte 24 ein in Richtung des Pfeiles B nach unten wirkendes Moment um eine zur Nutlängsrichtung parallele, d.h. senkrecht zur Zeichenebene gerichtete Achse ausgeübt, so wird zumindest auf den oberen Nutschenkel 34 ebenfalls eine in Richtung des Pfeiles A wirkende Spreizkraft ausgeübt, die bei Überlastung der Kopflagerplatte dazu führen kann, daß sich dieser Nutschenkel 34 bleibend verformt oder das Gleitstück 36 sogar aus der Schwalbenschwanznut 32 ausreißt.

Dieser Nachteil wird durch die erfindungsgemäße Lösung beseitigt, die in den Figuren 2 und 3 dargestellt ist, wobei gleiche Teile mit gleichen Bezugszeichen wie in Figur 1 bezeichnet sind. Bei der erfindungsgemäßen Lösung sind die Nutschenkel 34 auf ihrer Außenseite so bearbeitet, daß ihre jeweilige Außenfläche 64 parallel zu ihrer Innenfläche 62 ist und daß sie eine zur Außenfläche senkrechte Stirnfläche 66 haben. Ferner sind in der Stoßfläche 30 des Verbindungsholmes 28 für jeden Nutschenkel 34 eine zu den Flächen 62 und 64 der Nutschenkel parallele Stützfläche 68 und eine zu der Stirnfläche 66 parallele Stützfläche 70 vorgesehen, gegen welche die Außenseite 64 bzw. die Stirnfläche 66 des jeweiligen Nutschenkels 34 anliegen, wenn die beiden Bauteile 10 und 24 miteinander verbunden werden, wie dies in Figur 3 dargestellt ist. Dort erkennt man, daß nach dem Spannen des Gleitstückes 36 durch Anziehen der Spannschraube 46 die Nutschenkel 34 zwischen der Fläche 60 an dem Kopf 38 des Gleitstückes 36 und den jeweiligen Stützflächen 68 und 70 an dem Verbindungsholm 28 eingespannt werden. Die die Nutschenkel 34 festhaltenden Klemm- oder Spannkräfte wirken senkrecht zu den Flächen 62, 64 und 66. Die Nutschenkel 34 können nicht mehr nach außen ausweichen. Dies gilt sowohl bezüglich der von dem Gleitstück 36 ausgeübten Spannkräfte als auch bezüglich eines Drehmomentes, das bei einer Belastung der Kopflagerplatte 24 in Richtung des Pfeiles B auftritt. Die Einleitung eines Drehmomentes würde bei einer fehlenden Abstützung durch die Stützfläche 70 zu einer Drehbewegung des Verbindungsholmes führen, die aus einem Herausrutschen des einen Nutschenkels und einem Hineinrutschen des anderen Nutschenkels resultiert. Dies wird durch die Abstützung der Nutschenkel an den Stützflächen 70 verhindert. Auf diese Weise können auch relativ dünne Bauteile entlang relativ schmaler Stoßflächen zuverlässig miteinander verbunden werden, ohne daß die Gefahr besteht, daß die Verbindung bei stärkerer Belastung ausreißt.

## Patentansprüche

1. Anordnung zum lösbaren Verbinden zweier stumpf aneinander stoßender Bauteile (10, 24), von denen ein erstes Bauteil (10) eine Schwalbenschwanznut und das zweite Bauteil (24) mindestens ein zum Eingriff in die Schwalbenschwanznut (32) bestimmtes Gleitstück (36) hat, das nach dem Einführen in die Schwalbenschwanznut (32) mittels einer Spannvorrichtung (46) verstellbar ist, um die beiden Bauteile (10, 24) mit ihren Stoßflächen (22, 30) gegeneinander zu spannen, **dadurch gekennzeichnet, daß** die Innenfläche (62) und die Außenfläche (64) der die Schwalbenschwanznut (32) begrenzenden Nutschenkel (34) jeweils parallel zueinander sind und daß in der Stoßfläche (30) des das Gleitstück (36) tragenden Bauteiles (24) zu den Außenflächen (64) und den Stirnflächen (66) der Nutschenkel (34) parallele Stützflächen (68 bzw. 70) für die Nutschenkel (34) ausgebildet sind.

2. Anordnung nach Anspruch 1, **dadurch gekennzeichnet, daß** das Gleitstück (36) in einer Aussparung (42) der Stoßfläche (30) des zweiten Bauteiles (24) senkrecht zu der Stoßfläche (30) verstellbar geführt ist und eine Gewindebohrung (44) hat, in die eine sich an dem zweiten Bauteil (24) abstützende Spannschraube (46) eingreift.

3. Anordnung nach Anspruch 1 oder 2, **dadurch gekennzeichnet, daß** das erste Bauteil (10) eine Patientenlagerplatte ist, an deren eines Längsende das zweite Bauteil (24) ansetzbar ist.

4. Anordnung nach Anspruch 3, **dadurch gekennzeichnet, daß** das zweite Bauteil (24) eine Kopflagerplatte ist.

5. Anordnung nach Anspruch 4, **dadurch gekennzeichnet, daß** die Kopflagerplatte (24) einen Verbindungsholm (28) hat, der parallel zu der die Schwalbenschwanznut (32) aufweisenden Stirnwand (20) der Patientenlagerplatte (10) ist und in dem das mindestens eine Gleitstück (36) und die ihm zugeordnete Spannschraube (46) gelagert sind.

## Claims

1. An arrangement for the releasable connection of two abutting components (10, 24), of which a first component (10) has a dovetail groove and a second component (24) has at least one sliding member (36) intended for engagement in the dovetail groove (32) and adjustable by means of a clamping device (46) after introduction into the dovetail groove (32), in order to clamp the two components (10, 24) against one another by their abutting surfaces (22, 30), **characterised in that** the inner surface (62) and the outer surface (64) of the groove limbs (34) defining the dovetail groove (32) are parallel to one another in each case and **in that** support surfaces (68 and 70) for the groove limbs (34), such surfaces being parallel to the outer surfaces (64) and the end face surfaces (66) of the groove limbs (34), are formed in the abutting surface (30) of the component (24) carrying the sliding member (36).

2. An arrangement according to claim 1, **characterised in that** the sliding member (36) is guided to be movable perpendicularly to the abutting surface (30) in a recess (42) in the abutting surface (30) of the second component (24) and has a screwthreaded bore (44) in which engages a clamping screw (46) bearing against the second component (24).

3. An arrangement according to claim 1 or 2, **characterised in that** the first component (10) is a patient support panel, to one longitudinal end of which the second component (24) is attachable.

4. An arrangement according to claim 3, **characterised in that** the second component (24) is a head support panel.

5. An arrangement according to claim 4, **characterised in that** the head support panel (24) has a connecting member (28) which is parallel to the end wall (20) of the patient support panel (10) having the dovetail groove (32) and in which the at least one sliding member (36) and its associated clamping screw (46) are mounted.

## Revendications

1. Dispositif destiné à relier de façon amovible deux composants aboutés (10, 24), dont un premier composant (10) comporte une gorge en queue d'aronde et le deuxième composant (24) comporte au moins une pièce coulissante (36) qui est destinée à s'engager dans la gorge en queue d'aronde (32) et qui, après l'insertion dans la gorge en queue d'aronde (32), est réglable au moyen d'un dispositif de serrage (46) de façon à serrer l'un contre l'autre les deux composants (10, 24) au niveau de leurs surfaces d'aboutement (22, 30), **caractérisé en ce que** la surface intérieure (62) et la surface extérieure (64) de l'aile (34) délimitant la gorge en queue d'aronde (32) sont parallèles l'une à l'autre, et **en ce que** des surfaces d'appui (68 resp. 70) destinées à l'aile (34) et parallèles respectivement aux surfaces extérieures (64) et aux surfaces frontales (66) de l'aile (34), sont conformées dans la surface d'aboutement (30) du composant (24) supportant la pièce coulissante (36).

2. Dispositif selon la revendication 1, **caractérisé en ce que** la pièce coulissante (36) est guidée dans un évidement (42) de la surface d'aboutement (30) du deuxième composant (24) de façon à être déplaçable perpendiculairement à la surface d'aboutement (30), et elle comporte un taraudage (44) dans lequel s'engage une vis de serrage (46) s'appuyant sur le deuxième composant (24).

3. Dispositif selon la revendication 1 ou 2, **caractérisé en ce que** le premier composant (10) est une plaque de support de malade dont l'une des extrémités longitudinales peut recevoir le deuxième composant (24).

4. Dispositif selon la revendication 3, **caractérisé en ce que** le deuxième composant (24) est une plaque de support de tête.

5. Dispositif selon la revendication 4, **caractérisé en ce que** la plaque de support de tête (24) comporte un longeron d'assemblage (28) qui est parallèle à la paroi frontale (20), comportant la gorge en queue d'aronde (32), de la plaque de support de malade (10) et dans lequel sont montées l'au moins une pièce coulissante (36) et la vis de serrage (46) qui lui est associée.
